# EUROPEAN PATENT APPLICATION

(11) **EP 2 506 501 A1**
(43) Date of publication of application: **03.10.2012**
(21) Application number: 10791259.4
(22) Date of filing: 23.04.2010
(51) Int. Cl.: H04L 12/437

(54) **METHOD AND SYSTEM FOR IMPLEMENTING RING NETWORK PROTECTION**

(30) Priority: 24.11.2009 CN 200910224142
(71) Applicant: ZTE Corporation, Shenzhen, Guangdong 518057 (CN)
(72) Inventor: LI, Qin, Shenzhen Guangdong 518057 (CN); YANG, Ziteng, Shenzhen Guangdong 518057 (CN)
(74) Representative: D'Halleweyn, Nele Veerle Trees Gertrudis
(86) International application number: PCT/CN2010/072118
(87) International publication number: WO 2010/148753

(57) **Abstract**

The present invention discloses a method for realizing ring network protection, which comprises: nodes at both ends of each cross-segment of a path on the ring network perform Signal Degrade (SD) alarm detection to the cross-segment; each node sends the detected SD alarm to a protection node of the path; when receiving the SD alarm, the protection node performs protection switching process to a service on the cross-segment where the SD alarm occurs. The present invention further discloses a system for realizing ring network protection, which comprises cross-segments, nodes and protection nodes of the path on the ring network. With the method and system of the present invention, the network service quality of the services on the Transport Multi-Protocol Label Switching (T-MPLS) ring network can be ensured.

## Description

### Field of the Invention

The present invention relates to an Operation Administration and Maintenance (OAM) technology, in particular to a method and a system for realizing Transport Multi-Protocol Label Switching (T-MPLS) ring network protection.

### Background of the Invention

The T-MPLS is a connection-oriented packet transport network which is presented for meeting requirement from an operator for the packet transport network. The T-MPLS removes part of the complicated functions of data forwarding in a Multi-Protocol Label Switching (MPLS), can realize effective control and use of resources of a transport network, and is added with a connection-oriented OAM to realize the protection function of the T-MPLS network.

At present, the method for realizing the T-MPLS ring network protection is: when Signal Fail (SF) is detected on the T-MPLS ring network, performing corresponding protection switching process so as to avoid that services on the T-MPLS ring network cannot be transmitted normally. Obviously, the method is not provided with process when there is Signal Degrade (SD) occurring on the T-MPLS ring network. Although the SD does not disable the services to be transmitted normally, but it influences network service quality of the services on the T-MPLS ring network and further influences the user experience.

### Summary of the Invention

On that account, the present invention mainly provides a method and a system for realizing ring network protection, which can ensure the network service quality of the services on the T-MPLS ring network.

The technical solution of the present invention is realized as follows.

A method for realizing ring network protection, comprising:
each node at both ends of a cross-segment of a path on a ring network performing Signal Degrade (SD) alarm detection to the cross-segment;
each node determining, according to a detected SD alarm, that it is needed to perform protection switching process to the cross-segment where the SD alarm occurs, then sending an SD message to a protection node of the path;
the protection node determining, according to the received SD message, that it is needed to perform the protection switching process to the cross-segment where the SD alarm occurs, then performing the protection switching process to a service on the cross-segment where the SD alarm occurs.

Preferably, the step of each node at both ends of the cross-segment of the path on the ring network performing the SD alarm detection to the cross-segment comprises:
setting a packet loss rate threshold;
each Transport Multi-Protocol Label Switching Section (TMS) at both ends of the cross-segment respectively detecting a packet loss rate for sending data messages to the node itself through the cross-segment, and reporting, when determining that the detected packet loss rate is greater than the set packet loss rate threshold, the SD alarm to an Automatic Protection Switching (APS) module of the node itself.

Preferably, the step of each node determining, according to the detected SD alarm, that it is needed to perform the protection switching process to the cross-segment where the SD alarm occurs comprises:
if the node, which detects that the SD alarm occurs on the cross-segment, determines that a priority of the SD alarm is higher than that of a manual command received by the node itself, an APS message sent from a node at an opposite end of the cross-segment where the SD alarm occurs, and an alarm or a manual command or an APS message which causes a current state of the node itself, then determining that it is needed to perform the protection switching process to the cross-segment where the SD alarm occurs.

Preferably, when the method adopts a Wrapping mode to perform the protection switching, the protection node is each node at both ends of the cross-segment where the SD alarm occurs;
the step of sending the SD message to the protection node of the path comprises: the node which detects the SD alarm sending the SD message to the node at the opposite end of the cross-segment where the SD alarm occurs.

Preferably, when sending the SD message to the protection node of the path, the method further comprises: the node which detects the SD alarm transiting a state of the node itself to a state corresponding to the SD alarm;
correspondingly, the steps of the protection node determining, according to the received SD message, that it is needed to perform the protection switching process to the cross-segment where the SD alarm occurs, then performing the protection switching process to the service on the cross-segment where the SD alarm occurs comprise:
the node at the opposite end of the cross-segment where the SD alarm occurs determining whether a priority of the SD message received by the node itself is higher than that of an alarm detected by the node itself, a manual command received by the node itself, and an alarm or a manual command or an APS message which causes a current state of the node itself, if so, transiting a state of the node itself to the state corresponding to the SD alarm, otherwise, the node at the opposite end of the cross-segment where the SD alarm occurs replying a command of restoring to an original state to the node which detects the SD alarm, the node which detects the SD alarm restoring, when receiving the command of restoring to the original state, its state to its own state immediately prior to the state corresponding to the SD alarm.

Preferably, the step of transiting the state of the node itself to the state corresponding to the SD alarm comprises:
the node querying, in its forwarding table, a forwarding item corresponding to the node at the opposite end of the cross-segment where the SD alarm occurs, modifying the queried forwarding item to a forwarding item corresponding to an adjacent node, except the node at the opposite end of the cross-segment where the SD alarm occurs, of the node itself;
forwarding a received data message according to the modified forwarding table.

Preferably, when the method adopts a Steering mode to perform the protection switching, the protection node is an up-ring node and a down-ring node of the path;
the step of sending the SD message to the protection node of the path comprises: the node which detects the SD alarm respectively sending the SD message to the up-ring node and the down-ring node of the path.

Preferably, the steps of the protection node determining, according to the received SD message, that it is needed to perform the protection switching process to the cross-segment where the SD alarm occurs, then performing the protection switching process to the service on the cross-segment where the SD alarm occurs comprise:
an APS module of the up-ring node and an APS module of the down-ring node respectively determining whether a priority of the SD message received by the node itself is higher than that of an alarm detected by the node itself, a manual command received by the node itself, and an alarm or a manual command or an APS message which causes a current state of the node itself, sending a determined result to the node at the opposite end of the path, and entering a state corresponding to the SD alarm when the determined result is yes and a determined result sent from the node at the opposite end of the path is yes; the APS module cooperating with the node at the opposite end of the path to perform network topology calculation, selecting a path, which does not comprise the cross-segment where the SD alarm occurs and has a short path delay, between the node itself and the node at the opposite end of the path according to a calculation result, and switching a service on the path to the selected path; the APS module maintaining a current state of node itself when the determined result is no and/or a determined result sent from the node at the opposite end of the path is no.

Preferably, after performing the protection switching process to the service on the cross-segment where the SD alarm occurs, the method further comprises:
when detecting that there exists a cross-segment, where the SD alarm occurs, on the path, if a failure causing the protection switching process recovers, then performing the protection switching process to the service on the cross-segment where the SD alarm occurs, otherwise, not performing the protection switching process to the service on the cross-segment where the SD alarm occurs.

The present invention also provides a system for realizing ring network protection, comprising: each cross-segment and each node of a path on a ring network, wherein,
the node, as a node at an end of a cross-segment, is used for performing Signal Degrade (SD) alarm detection to the cross-segment connected with the node, and sending an SD message to a protection node of the path when determining, according to a detected SD alarm, that it is needed to perform protection switching process to the cross-segment where the SD alarm occurs; or
the node, as a protection node, is used for performing the protection switching process to a service on the cross-segment where the SD alarm occurs when determining, according to the received SD message, that it is needed to perform the protection switching process to the cross-segment where the SD alarm occurs.

Preferably, the node comprises: a Transport Multi-Protocol Label Switching Section (TMS) and an Automatic Protection Switching (APS) module, wherein,
the TMS is used for setting a packet loss rate threshold, detecting a packet loss rate for sending data messages to the node to which the TMS belongs through the cross-segment connected with the node to which the TMS belongs, and reporting, when determining that the detected packet loss rate is greater than the set packet loss rate threshold, the SD alarm to the APS module of the node to which the TMS belongs;
the APS module is used for sending the SD message to the protection node of the path when determining, according to the received SD alarm, that it is needed to perform the protection switching process to the cross-segment where the SD alarm occurs.

Preferably, the APS module comprises: a first determining module and a message sending module, wherein,
the first determining module is used for triggering the message sending module when determining that a priority of the received SD alarm is higher than that of a manual command received by the node to which the first determining module belongs, an APS message sent from the node at the opposite end of the cross-segment where the SD alarm occurs, and an alarm or a manual command or an APS message which causes a current state of the node to which the first determining module belongs;
the message sending module is used for sending the SD message to the protection node of the path.

Preferably, when a Wrapping mode is adopted to perform the protection switching, nodes at both ends of the cross-segment where the SD alarm occurs serve as protection nodes;
correspondingly, on a protection node, the APS module further comprises: a state transiting module, a state restoring module and a second determining module, wherein,
the state transiting module is used for transiting a state of the node to which the state transiting module belongs to a state corresponding to the SD alarm;
the state restoring module is used for restoring the state of the node to which the state restoring module belongs to a state of the node immediately prior to the state corresponding to the SD alarm;
the second determining module is used for determining whether a priority of the received SD message is higher than that of an alarm received by the node to which the second determining module belongs, a manual command received by the node to which the second determining module belongs, and an alarm or a manual command or an APS message which causes a current state of the node to which the second determining module belongs, if so, triggering the state transiting module, otherwise, replying a command of restoring to an original state to the node which detects the SD alarm.

Preferably, when a Steering mode is adopted to perform the protection switching, an up-ring node and a down-ring node of the path serve as protection nodes;
correspondingly, on a protection node, the APS module is further used for determining whether a priority of the received SD message is higher than that of an alarm received by the APS module, a manual command received by the node to which the APS module belongs, and an alarm or a manual command or an APS message which causes a current state of the node to which the APS module belongs, sending a determined result to the node at the opposite end of the path, and entering a state corresponding to the SD alarm when the determined result is yes and a determined result sent from the node at the opposite end of the path is yes; the APS

module is further used for cooperating with the node at the opposite end of the path to perform network topology calculation, selecting a path, which does not comprise the cross-segment where the SD alarm occurs and has a short path delay, between the node to which the APS module belongs and the node at the opposite end of the path according to the calculation result, and switching a service on the path to the selected path; the APS module is further used for maintaining a current state of the node to which the APS module belongs when the determined result is no and/or a determined result sent from the node at the opposite end of the path is no.

In accordance with the method and system for realizing ring network protection provided by the present invention, the SD alarm detection is performed to each cross-segment of the path on the ring network, and when the SD alarm is detected, the protection switching process is performed to the service on the cross-segment, where the SD alarm occurs, of the path in which the SD alarm is sent, thereby eliminating the influence of the SD on the network service quality of the services on the T-MPLS ring network and further ensuring the network service quality of the services on the T-MPLS ring network.

### Brief Description of the Drawings

Fig. 1 shows a flowchart of a method for realizing ring network protection according to an embodiment of the present invention; and
Fig. 2 shows a diagram of the network topology of the T-MPLS ring network.

### Detailed Description of the Embodiments

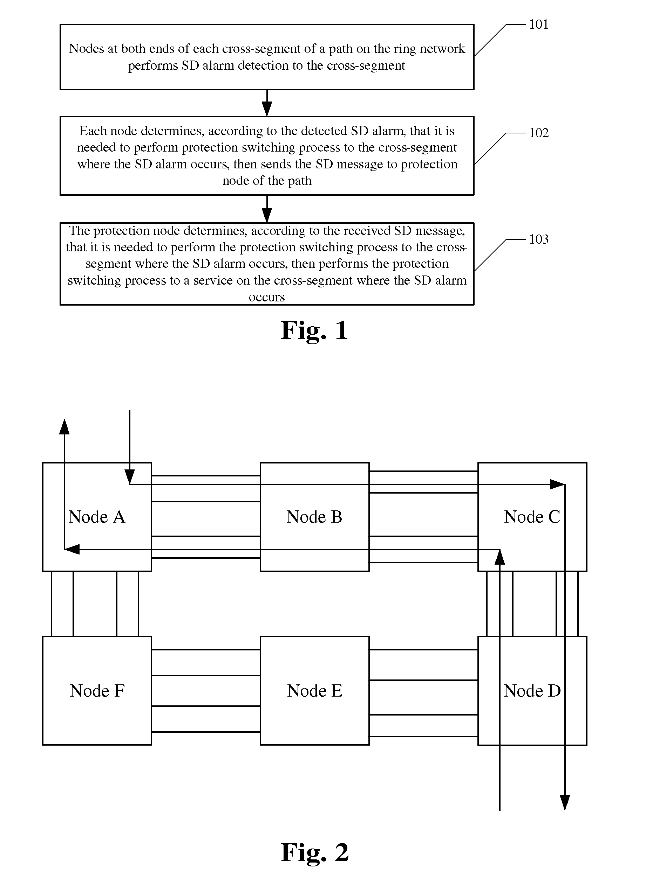

As shown in Fig. 1, the process of the method for realizing ring network protection according to an embodiment of the present invention comprises the steps as follows.

Step 101: The nodes at both ends of each cross-segment of a path on a ring network perform SD alarm detection to the cross-segment.

The above-mentioned ring network refers to the T-MPLS ring network.

Here, the step that each node at both ends of each cross-segment of the path on the ring network performs the SD alarm detection to the cross-segment specifically comprises the steps as follows.

Step a1: a packet loss rate threshold is preset.

The packet loss rate threshold is usually between 10⁻⁶ and 10⁻³. The packet loss rate threshold is set according to the network service quality required by the services on the ring network; the higher the required network service quality is, the smaller the set packet loss rate threshold is, thereby ensuring the network service quality of the service.

Step b1: Transport Multi-Protocol Label Switching Sections (TMS) at both ends of each cross-segment respectively detect a packet loss rate for sending data messages to the node itself through the cross-segment, and consider that there is the SD alarm occurring on the cross-segment and report the SD alarm to an Automatic Protection Switching (APS) module of the node itself when determining that the detected packet loss rate is greater than the set packet loss rate threshold.

The packet loss rate is realized by a pre-activated Loss Measurement (LM) function of the TMS of the node.

Step 102: Each node determines, according to the detected SD alarm, that it is needed to perform the protection switching process to the cross-segment where the SD alarm occurs, then sends an SD message to the protection node of the path.

When the embodiment of the present invention adopts a Wrapping mode to perform the protection switching, the protection node is each node at both ends of the cross-segment where the SD alarm occurs.

In this case, because the node at one end of the cross-segment where the SD alarm occurs is the one which detects the SD alarm, sending the detected SD alarm to the protection node of the path just requires the node which detects the SD alarm to send the SD message to the node at the other end of the cross-segment where the SD alarm occurs.

When the embodiment of the present invention adopts a Steering mode to perform the protection switching, the protection node is the up-ring node and down-ring node of the path;
the step of sending the SD message to the protection node of the path comprises: the node which detects the SD alarm respectively sends the SD message to the up-ring node and down-ring node of the path.

Preferably, the step that each node determines, according to the detected SD alarm, that it is needed to perform the protection switching process to the cross-segment where the SD alarm occurs specifically comprises:
if the node, which detects that there is the SD alarm occurring on the cross-segment, determines the priority of the SD alarm is higher than that of the manual command received by the node itself, the APS message sent from the node at the other end of the cross-segment where the SD alarm occurs, and the alarm or manual command or APS message which causes the current state of the node itself, then it is considered to need to perform the protection switching process to the cross-segment where the SD alarm occurs.

Step 103: The protection node determines, according to the received SD message, that it is needed to perform the protection switching process to the cross-segment where the SD alarm occurs, then performs the protection switching process to the service on the cross-segment where the SD alarm occurs.

When the embodiment of the present invention adopts the Wrapping mode to perform the protection switching, during sending the SD message to the protection node of the path, Step 103 further comprises: the node which detects the SD alarm transits its state to the state corresponding to the SD alarm;
correspondingly, the steps that the protection node determines, according to the received SD message, that it is needed to perform the protection switching process to the cross-segment where the SD alarm occurs, then performs the protection switching process to the service on the cross-segment where the SD alarm occurs comprise the steps as follows.

Step a2: the node at the other end of the cross-segment where the SD alarm occurs determines whether the priority of the SD message received by the node is higher than that of the alarm detected by the node, the manual command received by the node, and the alarm or manual command or APS message which causes its current state, if so, execute Step b2, and this process of ring network protection is ended, otherwise, execute Step c2 and Step d2.

Step b2: the node at the other end of the cross-segment where the SD alarm occurs transits its state to the state corresponding to the SD alarm.

Step c2: the node at the other end of the cross-segment, where the SD alarm occurs, returns a command of restoring to an original state to the node which detects the SD alarm.

Step d2: when receiving the command of restoring to the original state, the node which detects the SD alarm restores its state to it own state immediately prior to the state corresponding to the SD alarm; this process of ring network protection is ended.

Preferably, the step that the node transits its state to the state corresponding to the SD alarm comprises the steps as follows.

Step a3: the node at one end of the cross-segment where the SD alarm occurs queries, in its own forwarding table, the forwarding item corresponding to the node at the other end of the cross-segment where the SD alarm occurs, and modifies the queried forwarding item to the forwarding item corresponding to the adjacent node, except the node at the other end of the cross-segment where the SD alarm occurs, of the node itself; the received data messages are forwarded according to the modified forwarding table.

Wherein the forwarding item corresponding to the node at the other end of the cross-segment where the SD alarm occurs refers to the one including the MAC address which is the address of the node at the other end of the cross-segment where the SD alarm occurs.

The step that the node at one end of the cross-segment where the SD alarm occurs modifies the queried forwarding item to the forwarding item corresponding to the adjacent node, except the node at the other end of the cross-segment where the SD alarm occurs, of the node itself specifically comprises:
the node modifies the MAC address in the forwarding item to the address of another adjacent node, except the node at the other end of the cross-segment where the SD alarm occurs, of the node itself, modifies an outgoing port in the forwarding item to the port, on the node itself, for connecting the adjacent node, and modifies the tunnel label in the forwarding item to the tunnel label of a certain tunnel on the cross-segment which connects the node itself with the adjacent node.

Step b3: received data message are forwarded according to the modified forwarding table.

When the embodiment of the present invention adopts the Steering mode to perform the protection switching, Step 103 specifically comprises:
the APS module of the up-ring node and the APS module of the down-ring node respectively determines whether the priority of the SD message received by the node itself is higher than that of the alarm detected by the node itself, the manual command received by the node itself, and the alarm or manual command or APS message which causes the current state of the node itself, and sends the determined result to the node at the opposite end of the path; when the determined result is yes and the determined result sent from the node at the opposite end of the path is yes, the APS module enters the state corresponding to the SD alarm, cooperates with the node at the opposite end of the path to perform the network topology calculation, selects the path, which does not comprise the cross-segment where the SD alarm occurs and has a short path delay, between the node itself and the node at the opposite end of the path according to the calculation result, and switches the service on the path to the selected path; when the determined result is no and/or the determined result sent from the node at the opposite end of the path is no, the APS module maintains the current state of the node itself.

After performing the protection switching process to the cross-segment where the SD alarm occurs, the embodiment further comprises:
when detecting that there is the SD alarm occurring on a certain cross-segment or some cross-segments of the current path, if the failure causing the protection switching process recovers, then the protection switching process is performed to the service on the cross-segment where the SD alarm occurs, otherwise, the protection switching process is not performed to the service on the cross-segment where the SD alarm occurs; specifically, it is considered that there is a failure happening on the cross-segment once the SD alarm occurs on the cross-segment; and the failure causing the protection switching process recovers means that: the cross-segment, where the SD alarm occurs to further cause the protection switching process, has recovered, that is to say, its current packet loss rate is not greater than the set packet loss rate threshold.

In the embodiment of the present invention, the alarm comprises: an SF alarm and an SD alarm.

Both the SF alarm and SD alarm are switching requests. The switching requests further comprise: Lockout of Protection (LP) request, Lockout of cross-segment (LW) request, Forced Switching (FS) request, Manual Switching (MS) request, Wait To Restore (WTR) request, Exercise (EXER) request, Reverse Request (RR) request and No Request (NR) request, wherein the LP request and the LW request are manual commands; the bridging request codes and the priority corresponding to the switching requests are shown in Table 1 as follows:

**Table 1**

| Switching request | Bridging request code | Priority |
|---|---|---|
| LP request | 1111 | High |
| FS request | 1101 | |
| SF request | 1011 | |
| SD request | 1001 | |
| MS request | 0110 | ↑↓ |
| WTR request | 0101 | |
| EXER request | 0011 | |
| RR request | 0001 | |
| NR request | 0000 | Low |

The APS messages respectively carrying the bridging request codes corresponding to the switching requests are respectively: SD message, LP message, FS message, SF message, MS message, WTR message, EXER message, RR message and NR message. Here, the LW request is the one manually input to a certain node, and the operation of lockout of cross-segment is completed by the node itself without informing, by the APS message, the other nodes to assist, so there is no bridging request code and APS message corresponding to the LW request, and the priority of the LW request is equal to that of the LP message. The priority of each switching request is equal to that of its corresponding APS message.

Correspondingly, the states corresponding to the APS messages and the transiting relations thereof are shown in Table 2 as follows:

**Table 2**

| State-alarm or APS message causing the state | | Receive SD alarm | Receive SD request message | Receive pass-through message |
|---|---|---|---|---|
| A | Idle-NR | →G | →G | →B |
| B | Pass-though | O | O | O |
| | | →G | →G | |
| C | Switching-LP | O | O | O |
| D | Idle-LW | O | →O | →O |
| E | Switching-FS | →O | O | O |
| F | Switching-SF | O | O | O |
| G | Switching-SD | O | →O | →O |
| H | Switching-MS | →G | →G | →B |
| I | Switching-WTR | →G | →G | →B |
| J | Switching-EXER | →G | →G | →B |

In Table 2, when the destination address of the APS message received by the node is not the address of the node itself, the APS message is passed through. The Pass-through state can coexist with the switching state, which means, when the node is at the switching state, pass-through to the APS message can be performed. The Pass-through state does not influence transition of the switching state, which means the priorities of the alarms or the APS messages causing the current state of the node do not comprise the priority of causing the Pass-through state of the node. "A-J" are the serial numbers of the states caused by the alarms or the APS messages; "O" means maintaining the current state of the node; "→" means the node transits from the current state to the other state, for example, "→G" means the node transits from the current state to the Switching-SD.

The system for realizing ring network protection according to an embodiment of the present invention comprises: each cross-segment and each node of a path on a ring network, wherein,
the node, as the node at an end of the cross-segment, is used for performing the SD alarm detection to the cross-segment connected with the node itself, and sending the SD message to the protection node of the path when determining, according to the detected SD alarm, that it is needed to perform the protection switching process to the cross-segment where the SD alarm occurs; the node, as a protection node, is used for performing the protection switching process to the service on the cross-segment where the SD alarm occurs when determining, according to the received SD message, that it is needed to perform the protection switching process to the cross-segment where the SD alarm occurs.

The node comprises: a TMS and an APS module, wherein,
the TMS is used for presetting a packet loss rate threshold, detecting the packet loss rate for sending data messages to the node to which the TMS belongs through the cross-segment connected with the node to which the TMS belongs, and reporting the SD alarm to the APS module of the node to which the TMS belongs when determining that the detected packet loss rate is greater than the set packet loss rate threshold;
the APS module is used for sending the SD message to the protection node of the path when determining, according to the received SD alarm, that it is needed to perform the protection switching process to the cross-segment where the SD alarm occurs.

Preferably, the APS module comprises: a first determining module and a message sending module, wherein,
the first determining module is used for triggering the message sending module when determining that a priority of the received SD alarm is higher than that of a manual command received by the node to which the first determining module belongs, an APS message sent from the node at the opposite end of the cross-segment where the SD alarm occurs, and an alarm or a manual command or an APS message which causes a current state of the node to which the first determining module belongs;
the message sending module is used for sending the SD message to the protection node of the path.

Preferably, when a Wrapping mode is adopted to perform the protection switching, nodes at both ends of the cross-segment where the SD alarm occurs serve as protection nodes;
correspondingly, on a protection node, the APS module further comprises: a state transiting module, a state restoring module and a second determining module, wherein,
the state transiting module is used for transiting a state of the node to which the state transiting module belongs to a state corresponding to the SD alarm;
the state restoring module is used for restoring the state of the node to which the state restoring module belongs to a state of the node immediately prior to the state corresponding to the SD alarm;
the second determining module is used for determining whether a priority of the received SD message is higher than that of an alarm received by the node to which the second determining module belongs, a manual command received by the node to which the second determining module belongs, and an alarm or a manual command or an APS message which causes a current state of the node to which the second determining module belongs, if so, triggering the state transiting module, otherwise, replying a command of restoring to an original state to the node which detects the SD alarm.

Preferably, when a Steering mode is adopted to perform the protection switching, an up-ring node and a down-ring node of the path serve as protection nodes;
correspondingly, on a protection node, the APS module is further used for determining whether a priority of the received SD message is higher than that of an alarm received by the APS module, a manual command received by the node to which the APS module belongs, and an alarm or a manual command or an APS message which causes a current state of the node to which the APS module belongs, sending a determined result to the node at the opposite end of the path, and entering a state corresponding to the SD alarm when the determined result is yes and a determined result sent from the node at the opposite end of the path is yes; the APS module is further used for cooperating with the node at the opposite end of the path to perform network topology calculation, selecting a path, which does not comprise the cross-segment where the SD alarm occurs and has a short path delay, between the node to which the APS module belongs and the node at the opposite end of the path according to the calculation result, and switching a service on the path to the selected path; the APS module is further used for maintaining a current state of the node to which the APS module belongs when the determined result is no and/or a determined result sent from the node at the opposite end of the path is no.

The method and system for realizing ring network protection in accordance with the embodiments of the present invention are described below in detail by taking the processes of adopting the Wrapping mode to perform the protection switching and adopting the Steering mode to perform the protection switching as examples.

The process of adopting the Wrapping mode to perform the protection switching to the path A-B-C-D on the ring network as shown in Fig. 2 is as follows.

Step A1: the node B at one end of the cross-segment B-C on the path A-B-C-D detects that an SD alarm occurs on the cross-segment B-C, and the protection nodes are the node B and the node C.

Step B1: the node B sends an SD message to the node C, and determines that the priority of the SD alarm currently received by the node B is higher than that of the manual command received by the node B, the APS message sent from the node C, and the alarm or manual command or APS message which causes the current state of the node B, thus, the node B queries, in its own forwarding table, the forwarding item including the MAC address which is the address of the node C; the node B modifies the MAC address in the forwarding item to the address of the node A, modifies the outgoing port in the forwarding item to the port, on the node itself, for connecting the node A, and modifies the tunnel label in the forwarding item to the tunnel label of a certain tunnel on the cross-segment which connects the node B with the node A; the node B forwards received data messages according to the modified forwarding table.

Step C1: the node C receives the SD message sent from the node B, and determines that the priority of the SD message currently received by the node C is higher than that of the alarm detected by the node C, the manual command received by the node C, and the alarm or manual command or APS message which causes the current state of the node C, thus, the node C quires, in its own forwarding table, the forwarding item including the MAC address which is the address of the node B; the node C modifies the MAC address in the forwarding item to the address of the node D, modifies the outgoing port in the forwarding item to the port, on the node itself, for connecting the node D, and modifies the tunnel label in the forwarding item to the tunnel label of a certain tunnel on the cross-segment which connects the node C with the node D; the node C forwards received data messages according to the modified forwarding table.

Through Step b2 and Step c2, the data messages transmitted on the path A-B-C-D can be switched to the path A-B-A-F-E-D-C-D.

The process of adopting the Steering mode to perform the protection switching to the path A-B-C-D on the ring network as shown in Fig. 2 is as follows.

Step A2: the node B at one end of the cross-segment B-C on the path A-B-C-D detects that an SD alarm occurs on the cross-segment B-C, and the protection nodes are the node A and the node D.

Step B2: the node B sends an SD message to the node A and the node C.

Step C2: when receiving the SD message, the node A sends the SD message to the node D, determines whether the priority of the SD message received by the node A is higher than that of the alarm detected by the node A, the manual command received by the node A, and the alarm or manual command or APS message which causes the current state of the node A, and sends the determined result to the node D; when the determined result is yes and the determined result sent from the node D is yes, the node A enters the state corresponding to the SD alarm, cooperates with the node D to perform the network topology calculation, selects the path (namely A-F-E-D), which does not comprise the cross-segment B-C and has a short path delay, between the node A and the node D according to the calculation result, and switches the service on the path A-B-C-D to the path A-F-E-D.

Step D2: when receiving the SD message, the node D determines whether the priority of the SD message received by the node D is higher than that of the alarm detected by the node D, the manual command received by the node D, and the alarm or manual command or APS message which causes the current state of the node D, and sends the determined result to the node A; when the determined result is yes and the determined result sent from the node A is yes, the node D enters the state corresponding to the SD alarm, cooperates with the node A to perform the network topology calculation, selects the path (namely A-F-E-D), which does not comprise the cross-segment B-C and has a short path delay, between the node D and the node A according to the calculation result, and switches the service on the path A-B-C-D to the path A-F-E-D.

The above are only preferable embodiments of the present invention, and not used for limiting the scope of the present invention.

## Claims

1. A method for realizing ring network protection, **characterized by** comprising:
each node at both ends of a cross-segment of a path on a ring network performing Signal Degrade (SD) alarm detection to the cross-segment;
each node determining, according to a detected SD alarm, that it is needed to perform protection switching process to the cross-segment where the SD alarm occurs, then sending an SD message to a protection node of the path;
the protection node determining, according to the received SD message, that it is needed to perform the protection switching process to the cross-segment where the SD alarm occurs, then performing the protection switching process to a service on the cross-segment where the SD alarm occurs.

2. The method for realizing ring network protection according to claim 1, **characterized in that** the step of each node at both ends of the cross-segment of the path on the ring network performing the SD alarm detection to the cross-segment comprises:
setting a packet loss rate threshold;
each Transport Multi-Protocol Label Switching Section (TMS) at both ends of the cross-segment respectively detecting a packet loss rate for sending data messages to the node itself through the cross-segment, and reporting, when determining that the detected packet loss rate is greater than the set packet loss rate threshold, the SD alarm to an Automatic Protection Switching (APS) module of the node itself.

3. The method for realizing ring network protection according to claim 1 or 2, **characterized in that** the step of each node determining, according to the detected SD alarm, that it is needed to perform the protection switching process to the cross-segment where the SD alarm occurs comprises:
if the node, which detects that the SD alarm occurs on the cross-segment, determines that a priority of the SD alarm is higher than that of a manual command received by the node itself, an APS message sent from a node at an opposite end of the cross-segment where the SD alarm occurs, and an alarm or a manual command or an APS message which causes a current state of the node itself, then determining that it is needed to perform the protection switching process to the cross-segment where the SD alarm occurs.

4. The method for realizing ring network protection according to claim 3, **characterized in that** when the method adopts a Wrapping mode to perform the protection switching, the protection node is each node at both ends of the cross-segment where the SD alarm occurs;
the step of sending the SD message to the protection node of the path comprises: the node which detects the SD alarm sending the SD message to the node at the opposite end of the cross-segment where the SD alarm occurs.

5. The method for realizing ring network protection according to claim 4, **characterized in that** when sending the SD message to the protection node of the path, the method further comprises: the node which detects the SD alarm transiting a state of the node itself to a state corresponding to the SD alarm;
correspondingly, the steps of the protection node determining, according to the received SD message, that it is needed to perform the protection switching process to the cross-segment where the SD alarm occurs, then performing the protection switching process to the service on the cross-segment where the SD alarm occurs comprise:
the node at the opposite end of the cross-segment where the SD alarm occurs determining whether a priority of the SD message received by the node itself is higher than that of an alarm detected by the node itself, a manual command received by the node itself, and an alarm or a manual command or an APS message which causes a current state of the node itself, if so, transiting a state of the node itself to the state corresponding to the SD alarm, otherwise, the node at the opposite end of the cross-segment where the SD alarm occurs replying a command of restoring to an original state to the node which detects the SD alarm, the node which detects the SD alarm restoring, when receiving the command of restoring to the original state, its state to its own state immediately prior to the state corresponding to the SD alarm.

6. The method for realizing ring network protection according to claim 5, **characterized in that** the step of transiting the state of the node itself to the state corresponding to the SD alarm comprises:
the node querying, in its forwarding table, a forwarding item corresponding to the node at the opposite end of the cross-segment where the SD alarm occurs, modifying the queried forwarding item to a forwarding item corresponding to an adjacent node, except the node at the opposite end of the cross-segment where the SD alarm occurs, of the node itself;
forwarding a received data message according to the modified forwarding table.

7. The method for realizing ring network protection according to claim 1 or 2, **characterized in that** when the method adopts a Steering mode to perform the protection switching, the protection node is an up-ring node and a down-ring node of the path;
the step of sending the SD message to the protection node of the path comprises: the node which detects the SD alarm respectively sending the SD message to the up-ring node and the down-ring node of the path.

8. The method for realizing ring network protection according to claim 7, **characterized in that** the steps of the protection node determining, according to the received SD message, that it is needed to perform the protection switching process to the cross-segment where the SD alarm occurs, then performing the protection switching process to the service on the cross-segment where the SD alarm occurs comprise:
an APS module of the up-ring node and an APS module of the down-ring node respectively determining whether a priority of the SD message received by the node itself is higher than that of an alarm detected by the node itself, a manual command received by the node itself, and an alarm or a manual command or an APS message which causes a current state of the node itself, sending a determined result to the node at the opposite end of the path, and entering a state corresponding to the SD alarm when the determined result is yes and a determined result sent from the node at the opposite end of the path is yes; the APS module cooperating with the node at the opposite end of the path to perform network topology calculation, selecting a path, which does not comprise the cross-segment where the SD alarm occurs and has a short path delay, between the node itself and the node at the opposite end of the path according to a calculation result, and switching a service on the path to the selected path; the APS module maintaining a current state of node itself when the determined result is no and/or a determined result sent from the node at the opposite end of the path is no.

9. The method for realizing ring network protection according to claim 1, **characterized in that** after performing the protection switching process to the service on the cross-segment where the SD alarm occurs, the method further comprises:
when detecting that there exists a cross-segment, where the SD alarm occurs, on the path, if a failure causing the protection switching process recovers, then performing the protection switching process to the service on the cross-segment where the SD alarm occurs, otherwise, not performing the protection switching process to the service on the cross-segment where the SD alarm occurs.

10. A system for realizing ring network protection, **characterized by** comprising: each cross-segment and each node of a path on a ring network, wherein,
the node, as a node at an end of a cross-segment, is used for performing Signal Degrade (SD) alarm detection to the cross-segment connected with the node, and sending an SD message to a protection node of the path when determining, according to a detected SD alarm, that it is needed to perform protection switching process to the cross-segment where the SD alarm occurs; or
the node, as a protection node, is used for performing the protection switching process to a service on the cross-segment where the SD alarm occurs when determining, according to the received SD message, that it is needed to perform the protection switching process to the cross-segment where the SD alarm occurs.

11. The system for realizing ring network protection according to claim 10, **characterized in that** the node comprises: a Transport Multi-Protocol Label Switching Section (TMS) and an Automatic Protection Switching (APS) module, wherein,
the TMS is used for setting a packet loss rate threshold, detecting a packet loss rate for sending data messages to the node to which the TMS belongs through the cross-segment connected with the node to which the TMS belongs, and reporting, when determining that the detected packet loss rate is greater than the set packet loss rate threshold, the SD alarm to the APS module of the node to which the TMS belongs;
the APS module is used for sending the SD message to the protection node of the path when determining, according to the received SD alarm, that it is needed to perform the protection switching process to the cross-segment where the SD alarm occurs.

12. The system for realizing ring network protection according to claim 11, **characterized in that** the APS module comprises: a first determining module and a message sending module, wherein,
the first determining module is used for triggering the message sending module when determining that a priority of the received SD alarm is higher than that of a manual command received by the node to which the first determining module belongs, an APS message sent from the node at the opposite end of the cross-segment where the SD alarm occurs, and an alarm or a manual command or an APS message which causes a current state of the node to which the first determining module belongs;
the message sending module is used for sending the SD message to the protection node of the path.

13. The system for realizing ring network protection according to claim 12, **characterized in that** when a Wrapping mode is adopted to perform the protection switching, nodes at both ends of the cross-segment where the SD alarm occurs serve as protection nodes;
correspondingly, on a protection node, the APS module further comprises: a state transiting module, a state restoring module and a second determining module, wherein,
the state transiting module is used for transiting a state of the node to which the state transiting module belongs to a state corresponding to the SD alarm;
the state restoring module is used for restoring the state of the node to which the state restoring module belongs to a state of the node immediately prior to the state corresponding to the SD alarm;
the second determining module is used for determining whether a priority of the received SD message is higher than that of an alarm received by the node to which the second determining module belongs, a manual command received by the node to which the second determining module belongs, and an alarm or a manual command or an APS message which causes a current state of the node to which the second determining module belongs, if so, triggering the state transiting module, otherwise, replying a command of restoring to an original state to the node which detects the SD alarm.

14. The system for realizing ring network protection according to claim 11, **characterized in that** when a Steering mode is adopted to perform the protection switching, an up-ring node and a down-ring node of the path serve as protection nodes;
correspondingly, on a protection node, the APS module is further used for determining whether a priority of the received SD message is higher than that of an alarm received by the APS module, a manual command received by the node to which the APS module belongs, and an alarm or a manual command or an APS message which causes a current state of the node to which the APS module belongs, sending a determined result to the node at the opposite end of the path, and entering a state corresponding to the SD alarm when the determined result is yes and a determined result sent from the node at the opposite end of the path is yes; the APS module is further used for cooperating with the node at the opposite end of the path to perform network topology calculation, selecting a path, which does not comprise the cross-segment where the SD alarm occurs and has a short path delay, between the node to which the APS module belongs and the node at the opposite end of the path according to the calculation result, and switching a service on the path to the selected path; the APS module is further used for maintaining a current state of the node to which the APS module belongs when the determined result is no and/or a determined result sent from the node at the opposite end of the path is no.
